Europäisches Patentamt

European Patent Office

Office européen des brevets

(19)

(11)  **EP 1 621 750 A1**

(12)  **EUROPEAN PATENT APPLICATION**

(43) Date of publication:
    **01.02.2006 Bulletin 2006/05**

(51) Int Cl.:
    *F02D 41/24* (2006.01)

(21) Application number: **04103567.6**

(22) Date of filing: **26.07.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | • **Katie, Vantine**<br> **52062, Aachen (DE)**<br>• **Christen, Urs**<br> **52072, Aachen (DE)**<br>• **Sadai, Stephane**<br> **52064, Aachen (DE)**<br>• **Baylis, Warren**<br> **B98 0NY, Redditch (GB)** |
| (71) Applicant: **Ford Global Technologies, LLC, A subsidary of Ford Motor Company Dearborn, MI 48126 (US)** | (74) Representative: **Drömer, Hans-Carsten et al Ford-Werke Aktiengesellschaft, Patentabteilung NH/DRP, Henry-Ford-Strasse 1 50725 Köln (DE)** |
| (72) Inventors:<br>• **Moraal, Paul Eduard**<br> **6291 VP, Vaals (NL)**<br>• **Chevalier, Alain**<br> **4880, Aubel (BE)** | |

(54)  **Method and apparatus for calibrating the gain of a cylinder pressure sensor of an internal combustion engine**

(57)   The invention relates to a method for calibrating the gain of a cylinder pressure sensor (10) of an internal combustion engine (12). The sensor gain S is identified during the compression stroke of the cylinder (14) to which the sensor (10) is applied. Thus, it is possible to apply low cost pressure sensors for measuring the pressure within a cylinder of an internal combustion engine during normal operation of the engine.

Fig. 1

EP 1 621 750 A1

**Description**

FIELD OF THE INVENTION

The present invention relates to a method and an apparatus for calibrating the gain of a cylinder pressure sensor of an internal combustion engine according to claim 1 and 14, respectively.

BACKGROUND OF THE INVENTION

Sophisticated control systems help to reduce fuel consumption and exhaust emission levels of internal combustion engines. Especially, in the case of diesel engines, improvements of the control systems are largely driven by regulatory requirements regarding the exhaust emission levels and customer expectations. Improvements could be achieved through the combination of new generations of fuel injection systems coupled with advanced electronics and control systems. It is expected that both regulatory requirements (notably emissions levels) and customer expectations drive a further sophistication of the internal combustion engine in terms of refinement, power, and emission levels.
In particular, the application of a cylinder pressure based control is expected to play a major role as an enabler for new combustion and aftertreatment technologies, which will be necessary to meet future requirements. For example, homogeneous charge compression-ignition (HCCI) in diesel engines is expected to have the potential to provide dramatic increases in fuel efficiency, while dramatically reducing $NO_x$ emissions. However, HCCI engines pose a number of difficult performance and/or control issues which can only be overcome by sophisticated control systems, e.g., systems based on cylinder pressure measurement.
While sensors for the measurement of the cylinder pressure are commonly used in the development process of automotive engines, the actual application in engine management systems has been hindered by a lack of suitable pressure sensors which combine accuracy and durability at low cost. However, these requirements must be fulfilled for mass application in automobiles.
JP 59193326 A discloses a calibration device for a cylinder pressure sensor. The device can calculate a theoretical pressure within the cylinder which allows to calibrate the cylinder pressure sensor. However, in order to calculate the pressure either the ignition or the fuel injection has to be suspended, e.g., the expansion stroke has to be skipped.

OBJECT OF THE INVENTION

It is an object of the present invention to provide a method and an apparatus for calibrating the gain of a cylinder pressure sensor of an internal combustion engine which enable accurate measurements with low cost pressure sensors during normal operation of the engine.
This object is achieved by a method for calibrating the gain of a cylinder pressure sensor of an internal combustion engine as claimed in claim 1 and a respective apparatus as claimed in claim 14. Preferred embodiments of the invention are specified in the dependent claims.

SUMMARY OF THE INVENTION

The main idea of the invention is to perform an identification of the sensor gain during the compression stroke of the respective cylinder. According to this online identification during the operation of the engine, it is possible to calibrate the pressure sensor gain and, thus, to achieve accurate measurements of the actual pressure within the cylinder during operation of the engine. The invention makes it possible to use standard, e.g. low cost pressure sensors as cylinder pressure sensors not only during the development of an engine but also during normal operation of the engine. This enables a more sophisticated engine control system and, thus, the significant reduction of the fuel consumption and exhaust emission levels. Furthermore, the invention can be applied for new combustion and aftertreatment technologies such as HCCI engines, e.g., in order to adapt existing engine control methods and systems to these new technologies.
The invention relates to a method for calibrating the gain of a cylinder pressure sensor of an internal combustion engine. The sensor gain S is identified during the compression stroke of the cylinder to which the sensor is applied. During the compression stroke of the engine, the cylinder represents a closed volume. This enables the determination of the pressure and temperature in the cylinder at the end of the intake stroke (this pressure and temperature can be related to the intake manifold pressure and temperature, which are commonly measured), the engine's geometric data (cylinder volume as a function of crank position), and some physical relationships to describe the pressure and temperature throughout the compression stroke. Based on the above information, an (online) identification of the sensor gain is possible, which can be used to calibrate the pressure sensor.

The sensor gain S is preferably identified by

a) determining a first voltage of the pressure sensor and a first pressure within the cylinder at a first reference point of the crank angle of the engine and by

b) determining a second voltage of the pressure sensor and calculating a second pressure within the cylinder at a second reference point of the crank angle of the engine.

In order to accurately compute the second pressure, the first reference point should be chosen after the bottom dead centre at a point where each of the intake valves has closed. When the intake valves are closed, the cylinder represents a closed volume for which the second pressure can be calculated with the thermodynamic laws.

Typically, the first reference point is chosen at a crank angle from a range of about 30˚ to about 40˚ after the bottom dead centre.

The first voltage of the pressure sensor can be determined by averaging measurements of the voltage signal of the pressure sensor taken in an interval around the first reference point in order to receive more accurate calibration results.

The pressure within the cylinder at the first reference point can be calculated from the measured manifold pressure, the volumetric efficiency related to the density of air in the intake manifold of the engine and a factor accounting for an initial compression in the cylinder. Usually, the volumetric efficiency is determined during the development of an engine; it can be stored in a lookup table. Then, the volumetric efficiency can be taken from this lookup table which can be stored in a memory of the ECU (engine control unit).

Typically, the second reference point is chosen close to the top dead centre but before any injection in the cylinder has occurred. Preferably, the second reference point is chosen at a crank angle from a range of about 65˚ to about 170˚ after the bottom dead centre.

In order to achieve more accurate results, for a range of second reference points each sensor gain S can be estimated and the average of the sensor gain S can be calculated by averaging the estimated sensor gains S.

The sensor gain S should be passed through a low pass filter in order to filter high frequency changes of the sensor gain which can result from disturbances or measurement errors.

Preferably, the filter time constant of the low pass filter is scheduled as a function of the engine's operating conditions.

In a preferred embodiment, the first and second reference points ($\theta_1$, $\theta_2$) are triggered by a signal of a crank angle sensor.

According to another aspect, the invention relates to an apparatus for calibrating the gain of a cylinder pressure sensor of an internal combustion engine, comprising means for identifying the sensor gain S during the compression stroke of the cylinder to which the sensor is applied.

Preferably, the means are adapted to

a) determine a first voltage of the pressure sensor and a first pressure within the cylinder at a first reference point of the crank angle of the engine and to

b) determine a second voltage of the pressure sensor and calculate a second pressure within the cylinder at a second reference point of the crank angle of the engine .

The first reference point should be chosen after the bottom dead centre at a point where each of the intake valves has closed. Preferably, the first reference point is chosen at a crank angle from a range of about 30˚ to about 40˚ after the bottom dead centre.

The means can be adapted to determine the first voltage of the pressure sensor by averaging measurements of the voltage signal of the pressure sensor taken in an interval around the first reference point.

Further, the means can be adapted to calculate the pressure within the cylinder at the first reference point from the measured manifold pressure, the volumetric efficiency related to the density of air in the intake manifold of the engine and a factor accounting for an initial compression in the cylinder.

In a preferred embodiment of the apparatus, the volumetric efficiency is stored in a lookup table stored in a memory of the ECU.

The second reference point should be chosen close to the top dead centre but before any injection in the cylinder has occurred. Preferably, the second reference point is chosen at a crank angle from a range of about 65˚ to about 170˚ after the bottom dead centre.

The means can be adapted to estimate each sensor gain S for a range of second reference points and to calculate the average of the sensor gain S by averaging the estimated sensor gains S.

Preferably, the means comprise a low pass filter through which the average of the sensor gain S is passed. In a preferred embodiment of the invention, the means are adapted to schedule the filter time constant of the low pass filter as a function of the engine's operating conditions.

Furthermore, the means can be adapted to receive a signal of a crank angle sensor to trigger the first and second reference points.

Preferably, the means are implemented by a microprocessor or microcontroller and a memory in which an algorithm implementing the inventive calibration method is stored.

Further advantages and features of the invention will become apparent from the following description of preferred embodiments of the invention.

BRIEF DESCRITPION OF THE DRAWINGS

The present invention will now be described, by way of example, with reference to the accompanying drawings, in which

Fig. 1    shows an embodiment of an apparatus for calibrating the gain of a cylinder pressure sensor of an internal combustion engine according to the invention, and

Fig. 2    shows an embodiment of a method for calibrating the gain of a cylinder pressure sensor of an internal combustion engine according to the invention.

DETAILED DESCRIPTION OF PREFERRED EMBODIMENTS

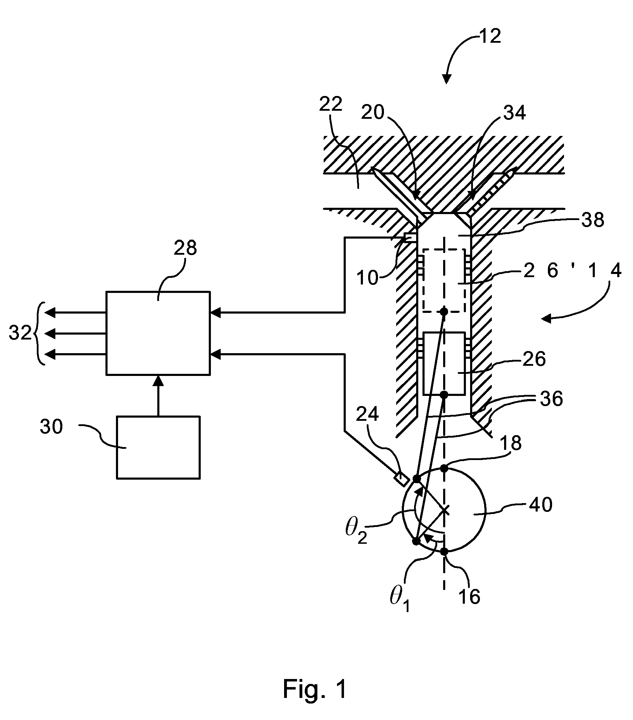

Fig. 1 shows in a cross sectional view of the cylinder 14 of an internal combustion engine 12. A piston 26 is connected to a crankshaft 40 via a connecting rod 36. Translatory motions of the piston 26 within the cylinder 14 are translated via the connecting rod 36 into rotations of the crankshaft 40. The position of the piston 26 within the cylinder 14 depends on the crankshaft angle (CA). Thus, the cylinder volume 38 is a function of the CA. The CA is electronically determined via a crankshaft position sensor 24. At the bottom dead center (BDC) 16 of the crankshaft, the cylinder volume 38 has the highest possible value. Inversely, at the top dead center (TDC) 18 of the crankshaft, the cylinder volume 38 has the smallest possible value. A pressure sensor 10 measures the pressure within the cylinder 14. The signals of the crankshaft position sensor 24 and the pressure sensor 10 are processed by processing means 28 which can be implemented by an electronic control unit (ECU). Typically, the processing means 28 comprise a microprocessor which executes a control algorithm for setting operating conditions of the engine 12 such as the fuel injection. The control algorithm is stored in memory means 30 which can be part of the ECU. Control signals 32 of the processing means 28 drive actuators and/or control devices (not shown) in order to set the operating conditions of the engine 12.

In the following, the method for calibrating a low cost pressure sensor according to the invention is explained in detail with reference to Fig. 1. In this description, reference is made to diesel engines. However, the disclosed ideas according to the invention also apply equally to other internal combustion engines such as gasoline engines without any restriction, unless otherwise stated.

The relation between the pressure $\rho$ applied to the pressure sensor 10 for measuring the pressure within the cylinder 14 of the diesel engine 12 and the voltage trace U thus generated can be assumed to be of the following form

$$(1) \quad U = S(\rho - \rho_0) + U_0,$$

where $\rho_0$ and $U_0$ denote a reference pressure and voltage level respectively, and S denotes the sensor gain (in [Volts/bar] or equivalent units). If $S$ is constant, equation (1) describes a linear approximation of the relation between the pressure $\rho$ and the voltage $U$ generated by the pressure sensor 10.

Equation (1) can be applied to two different reference points 1 and 2, corresponding to two different crank angles of the crankshaft 40 and, thus, corresponding to two different pressures $\rho_1$ and $\rho_2$ within the cylinder:

$$(2) \quad U_1 = S(\rho_1 - \rho_0) + U_0,$$

$$(3) \quad U_2 = S(\rho_2 - \rho_0) + U_0,$$

Subtraction of the two equations allows elimination of the unknown reference pressure and voltage and yields:

$$(4)\ S\,(p_2 - p_1) = U_2 - U_1 \qquad \Rightarrow \qquad S = \frac{U_2 - U_1}{p_2 - p_1}$$

The reference point 1 can be assumed to be known if the cylinder pressure at the end of the intake stroke is used. Preferably, reference point 1 should be chosen after the bottom dead center (BDC) 16 at a point where the intake valves 20 of the cylinder have closed. This is usually up to 30-40° crank angle after BDC. Then, the thermodynamic laws can be used to compute the pressure and temperature at a second point during the compression cycle, since the cylinder represents a closed control volume. In Fig. 1, reference point 1 is chosen at the crank angle $\theta_1$.

By definition, the density of the charge trapped in the cylinder at the end of the intake stroke is related to the density of air in the intake manifold 22 by means of the volumetric efficiency $\eta$. The volumetric efficiency $\eta$ can be determined during the development of an engine 12 and stored in the memory means 30 as a lookup table. In order to determine the pressure at the first reference point 1 at crank angle $\theta_1$, the volumetric efficiency map can simply be adjusted by a factor $\alpha_1$ to account for the initial compression. The assumption, that the charge temperature does not change significantly during the intake stroke, permits to calculate the cylinder pressure at the first reference point 1 corresponding to crank angle $\theta_1$, which is expressed as:

$$(5)\ p_1 = \alpha_1\,\eta\,p_{boost}$$

where $p_{boost}$ denotes the intake manifold pressure. In order to determine the sensor gain $S$, a second pressure value $p_2$ and the associated voltage reading $U_2$ is required according to equation (4). Therefore, the voltage $U_2$ is measured at a second reference point 2 corresponding to a second crank angle $\theta_2$, close to but before the TDC 18 (fuel injection). In order to do this, the ideal gas law can be used:

$$(6)\ pV = mRT$$

where V denotes the volume, while p, m, T, denote the pressure, mass and temperature, respectively, of the gas in this volume; R denotes the universal gas constant.

Further, the following equation for polytrophic compression of a gas can be utilized:

$$(7)\ pV^{\,\gamma(T)} = const$$

where $\gamma(T)$ denotes the ratio of constant pressure specific heat capacity and constant volume specific heat capacity. For air fuel mixtures, $\gamma$ can be expressed as a function of temperature and gas composition by using, for example, the Krieger-Borman correlations ("The computation of apparent heat release for internal combustion engines", ASME paper 66-WA/DGP-4, 1966).

Without loss of generality, only the temperature dependence is considered, assumed that no EGR (exhaust gas recirculation) is used, i.e., only pure air is considered. Inclusion of the dependence of the thermodynamic properties on the gas composition is a straightforward extension, and can improve the accuracy and the results of these calculations.

Alternatively, to simplify the calculations, $\gamma$ can be set to a constant, e.g., $\gamma = 1.4$. When using the above equations, it will prove convenient to define the "instantaneous compression ratio" $\varepsilon$ as follows:

$$(8)\ \varepsilon = \frac{V_1}{V_2}$$

where $V_1$ and $V_2$ refer to the cylinder volumes at the measuring points (corresponding to the different crank angle

positions) $\theta_1$ and $\theta_2$, respectively.

With this a notational shorthand is introduced, namely, $V_1$ for $V(\theta_1)$ and $V_2$ for $V(\theta_2)$, etc. In the remainder this same shorthand is used in order to simplify the notation.

As previously stated, it is assumed that the CA $\theta_1$ is fixed to be at a constant offset from the BDC. However, it can be advantageous to use an averaged value of the measured signal voltage signal $U_1$ in an interval around this fixed CA $\theta_1$. With this fixed CA $\theta_1$, the volume $V_1$ is also fixed. With this assumption, the instantaneous compression ratio becomes a function of the crank angle position only.

In order to calculate $p_2$, knowledge of the corresponding temperature is required. This temperature depends on y, which in turn depends on temperature, leading to an algebraic loop (implicit equation). This can be solved as follows: $T_2$ can be calculated with equation (6) as

$$(9)\quad T_2 = \frac{p_2 V_2}{mR} = \frac{p_2 V_2}{p_1 V_1} T_1 = \frac{1}{\varepsilon}\frac{p_2}{p_1} T_1$$

The ratio of pressures can be eliminated by using equation (7) as follows:

$$(10)\qquad p_1 V_1^{\gamma_1} = p_2 V_2^{\gamma_2} \Rightarrow \frac{p_2}{p_1} = \frac{V_1^{\gamma_1}}{V_2^{\gamma_2}}$$

which yields

$$(11)\qquad T_2 = \frac{1}{\varepsilon}\frac{p_2}{p_1} T_1 = \frac{1}{\varepsilon}\frac{V_1^{\gamma_1}}{V_2^{\gamma_2}} T_1 = \frac{1}{\varepsilon}\varepsilon^{\gamma_2} V_1^{\gamma_1-\gamma_2} T_1 = \varepsilon^{\gamma_2-1} V_1^{\gamma_1-\gamma_2} T_1$$

Since $\gamma$ changes with temperature (and gas composition, which is not considered here as mentioned previously), actually an implicit equation for $T_2$ given $T_1$ is achieved. $T_2$ denotes the solution to the following equation, which is a simple rearrangement of equation (11)

$$(12)\qquad \tilde{T}_2 - \varepsilon^{\gamma_2-1} V_1^{\gamma_1-\gamma_2} T_1 = 0$$

This equation can be solved using standard numerical methods. However, to reduce online computation it will be advantageous to solve $\tilde{T}_2$ offline for a range of values for $T_1$ and $\theta_2$, and store the corresponding solutions in a lookup table in the memory means 30.

The calculation of this temperature $\tilde{T}_2$ is based on ideal compression without consideration of heat transfer between compressed gas and cylinder wall. The heat transfer can be taken into account by correcting the solution $\tilde{T}_2$ to the above by an experimentally determined correction factor $\alpha_2$, i.e., $T_2 = \alpha_2 \tilde{T}_2$, where $\alpha_2$ can be implemented as function of engine speed and engine temperature.

Yet another alternative is to solve the equivalent equation

$$(13)\qquad \frac{\tilde{T}_2}{T_1} - \varepsilon^{\gamma_2-1} V_1^{\gamma_1-\gamma_2} = 0$$

for $T_2/T_1$, since, as will be evident, only this quotient of temperatures is of interest.

Having calculated $T_2$ and $p_1$, $p_2$ can now be calculated from the ideal gas law as follows:

$$(14) \qquad \left.\begin{array}{l} p_1 V_1 = mRT_1 \\ p_2 V_2 = mRT_2 \end{array}\right\} \Rightarrow p_2 = \frac{p_1 V_1 T_2}{T_1 V_2} = p_1 \varepsilon \frac{T_2}{T_1}$$

Now going back to the sensor model and sensor gain calculation, (14) and (5) are substituted into (4). The two correction factors $\alpha_1$ and $\alpha_1$ as well as the volumetric efficiency $\eta_v$ may be lumped together into one correction factor $\alpha$, to simplify the calibration (application specific fine-tuning) of this algorithm.

This single correction factor $\alpha$ can be scheduled as function of engine operating parameters, such as speed, load, coolant temperature, etc..

$$(15) \qquad \hat{S}(\theta_2) = \frac{U_2 - U_1}{(\varepsilon \frac{T_2}{T_1} - 1) p_1} = \frac{U_2 - U_1}{(\varepsilon \frac{T_2}{T_1} - 1) \alpha \cdot p_{boost}}$$

With this, the sensor gain $\hat{S}(\theta_2)$ can be estimated at each calculation point of interest. It is possible, to estimate the sensor gain $S(\theta_2)$ for more than one calculation point in a window under consideration. This window can be close to the TDC 18, but before any injection has occurred. The calculated values are then averaged in order to achieve an overall estimation of the sensor gain $S(\theta_2)$. For example, $S(\theta_2)$ can be calculated for a range of crank angles from about 65 degree to about 170 degree. The average can be taken over, for example, the last 30 degrees, where experiments have shown that the values are converging. The average is denoted by $S_i$, i.e., $S_i$ can be calculated as follows:

$$(16) \qquad \hat{S}_i = \frac{1}{n_1 - n_0} \sum_{k=n_0}^{n_1} \hat{S}(\theta_k)$$

where the averaging window in the compression stroke is defined to be between the crank angles $\theta_{n0}$ and $\theta_{n1}$.

Since the sensor gain is expected to change slowly, $S_i$ should be passed through a low pass filter to come to an online estimation of S, i.e.,

$$(17) \qquad S_{i+1} = \beta \cdot S_i + (1 - \beta) \hat{S}_i$$

The parameter $\beta$ determines the filter time constant ("forgetting factor") and can be scheduled as a function of engine operating conditions. This dependence on engine operating conditions can account for the possibility that the identification procedure described here yields better results under certain operating conditions than under others (for example, high engine speed versus low engine speed, with or without EGR).

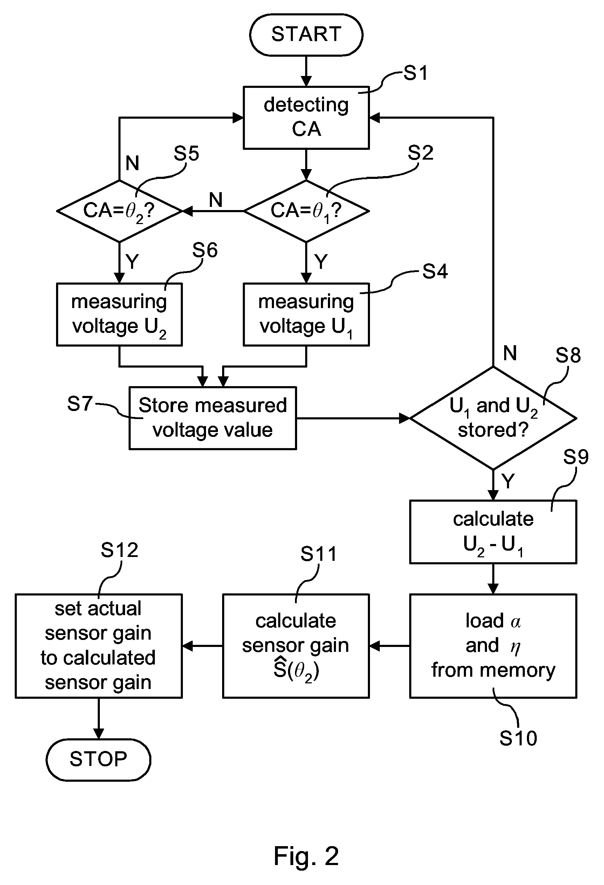

Fig. 2 shows the flow diagram of an embodiment of an algorithm implementing the online identification method of the sensor gain of a cylinder pressure sensor according to the invention.

In a first step S1 of the algorithm, the crankshaft position sensor 24 detects the position of the crankshaft. The detected position is converted into a digital value and processed in order to calculate the corresponding crank angle CA.

In a second step S2, the calculated CA is compared to a first predefined CA $\theta_1$ corresponding to the first reference point 1 mentioned above. If the detected CA equals the predefined CA $\theta_1$, a voltage sample $U_1$ is measured via the pressure sensor 10 in a further step S4. If the detected CA does not equal the predefined CA $\theta_1$, a further comparison of the detected CA with a second predefined CA $\theta_2$ corresponding to the second reference point 2 mentioned above is performed in a step S5. If the detected CA does not equal the second predefined CA $\theta_2$, the algorithm goes back to step S1 and detects the CA. Otherwise, i.e., if the detected CA equals the second predefined CA $\theta_2$, a voltage sample $U_2$ is measured via the pressure sensor 10 in a step S6.

Following the steps S4 and S6, the measured voltage samples $U_1$ and $U_2$, respectively, are stored in a memory, e.g., the memory means 30, in a step S7. In a further step S8, the algorithm checks whether both voltage samples $U_1$

and $U_2$ have been stored already. If not, the algorithm goes back to step 1. Otherwise, the difference between the voltage samples $U_1$ and U$_2$, is calculated in a step S9. In a following step S10, the correction factor $\alpha$ and the volumetric efficiency $\hat{\mathscr{L}}$ are loaded from the memory means 30. After loading these values, the estimated sensor gain $S(\theta_2)$ is calculated according to equation (15) in a step S11. This algorithm is executed during each compression stroke. In a slower loop, the averaging and filtering operations are performed once per cycle and per cylinder. Finally, in a step S12, the actual sensor gain is set the sensor gain calculated in step S11.

**Reference numerals**

| 10 | cylinder pressure sensor |
|---|---|
| 12 | internal combustion engine |
| 14 | cylinder |
| 16 | bottom dead centre (BDC) |
| 18 | top dead centre (TDC) |
| 20 | intake valve |
| 22 | intake manifold |
| 24 | crankshaft position sensor |
| 26 | piston (first position, volume $V_1$) |
| 26' | piston (second position, volume $V_2$) |
| 28 | processing means |
| 30 | memory means |
| 32 | control signals |
| 34 | outtake valve |
| 36 | connecting rod |
| 38 | cylinder volume |
| 40 | crankshaft |

**Claims**

**1.** Method for calibrating the gain of a cylinder pressure sensor (10) of an internal combustion engine (12), **characterized in that** the sensor gain S is identified during the compression stroke of the cylinder (14) to which the sensor (10) is applied.

**2.** Method according to claim 1, **characterized in that** the sensor gain S is identified by

a) determining a first voltage (U1) of the pressure sensor (10) and a first pressure within the cylinder (14) at a first reference point ($\theta$1) of the crank angle (18) of the engine (12) and by
b) determining a second voltage (U2) of the pressure sensor (10) and calculating a second pressure within the cylinder (14) at a second reference point ($\theta$1) of the crank angle (18) of the engine (12).

**3.** Method according to claim 2, **characterized in that** the first reference point ($\theta$1) is chosen after the bottom dead center (16) at a point where each of the intake valves (20) has closed.

**4.** Method according to claim 3, **characterized in that** the first reference point ($\theta$1) is chosen at a crank angle from a range of about 30o to about 40o after the bottom dead centre.

**5.** Method according to claim 2, 3 or 4, **characterized in that**

the first voltage (U1) of the pressure sensor (10) is determined by averaging measurements of the voltage signal of the pressure sensor (10) taken in an interval around the first reference point ($\theta$1).

6. Method according to any of claims 2 to 5,
   **characterized in that**
   the pressure within the cylinder (14) at the first reference point ($\theta$1) is calculated from the measured manifold pressure, the volumetric efficiency ($\eta'$) related to the density of air in the intake manifold (22) of the engine (12) and a factor ($\alpha$1) accounting for an initial compression in the cylinder (14).

7. Method according to claim 6,
   **characterized in that**
   the volumetric efficiency ($\eta$) is taken from lookup table stored in a memory of the ECU.

8. Method according to any of claims 2 to 7,
   **characterized in that**
   the second reference point ($\theta$2) is chosen close to the top dead centre (18) but before any injection in the cylinder (14) has occurred.

9. Method according to claim 8,
   **characterized in that**
   the second reference point ($\theta$2) is chosen at a crank angle from a range of about 65o to about 170o after the bottom dead centre.

10. Method according to any of the claims 2 to 9,
    **characterized in that**
    for a range of second reference points ($\theta$2) each sensor gain S($\theta$2) is estimated and the sensor gain S is calculated by averaging the estimated sensor gains S($\theta$2).

11. Method according to claim 10,
    **characterized in that**
    the sensor gain S is passed through a low pass filter.

12. Method according to claim 11,
    **characterized in that**
    the filter time constant of the low pass filter is scheduled as a function of the engine's operating conditions.

13. Method according to any of the claims 2 to 9,
    **characterized in that**
    the first and second reference points ($\theta$1, $\theta$2) are triggered by a signal of a crank angle sensor (24).

14. Apparatus for calibrating the gain of a cylinder pressure sensor (10) of an internal combustion engine (12), comprising means (28, 30) for identifying the sensor gain S during the compression stroke of the cylinder (14) to which the sensor (10) is applied.

15. Apparatus according to claim 14,
    **characterized in that**
    the means (28, 30) are adapted to

    a) determine a first voltage (U1) of the pressure sensor (10) and a first pressure within the cylinder (14) at a first reference point ($\theta$1) of the crank angle (18) of the engine (12) and to
    b) determine a second voltage (U2) of the pressure sensor (10) and calculate a second pressure within the cylinder (14) at a second reference point ($\theta$1) of the crank angle (18) of the engine (12).

16. Apparatus according to claim 15,
    **characterized in that**
    the first reference point ($\theta$1) is chosen after the bottom dead centre (16) at a point where each of the intake valves (20) has closed.

**17.** Apparatus according to claim 16,
**characterized in that**
the first reference point (θ1) is chosen at a crank angle from a range of about 30o to about 40o after the bottom dead centre.

**18.** Apparatus according to claim 15, 16 or 17,
**characterized in that**
the means (28, 30) are adapted to determine the first voltage (U1) of the pressure sensor (10) by averaging measurements of the voltage signal of the pressure sensor (10) taken in an interval around the first reference point (θ1).

**19.** Apparatus according to any of claims 15 to 18,
**characterized in that**
the means (28, 30) are adapted to calculate the pressure within the cylinder (14) at the first reference point (θ1) from the measured manifold pressure, the volumetric efficiency ( $\eta$ ) related to the density of air in the intake manifold (22) of the engine (12) and a factor (α1) accounting for an initial compression in the cylinder (14).

**20.** Apparatus according to claim 19,
**characterized in that**
the volumetric efficiency ( $\eta$ ) is stored in a lookup table stored in a memory of the ECU.

**21.** Apparatus according to any of claims 15 to 20,
**characterized in that**
the second reference point (θ2) is chosen close to the top dead centre (18) but before any injection in the cylinder (14) has occurred.

**22.** Apparatus according to claim 21,
**characterized in that**
the second reference point (θ2) is chosen at a crank angle from a range of about 65o to about 170o after the bottom dead centre.

**23.** Apparatus according to any of the claims 15 to 22,
**characterized in that**
the means (28, 30) are adapted to estimate each sensor gain S(θ2) for a range of second reference points (θ2) and to calculate the sensor gain S by averaging the estimated sensor gains S(θ2).

**24.** Apparatus according to claim 23,
**characterized in that**
the means (28, 30) comprise a low pass filter through which the sensor gain S is passed.

**25.** Apparatus according to claim 24,
**characterized in that**
the means (28, 30) are adapted to schedule the filter time constant of the low pass filter as a function of the engine's operating conditions.

**26.** Apparatus according to any of the claims 15 to 25,
**characterized in that**
the means (28, 30) are adapted to receive a signal of a crank angle sensor (24) to trigger the first and second reference points (θ1, θ2).

Fig. 1

Fig. 2

**European Patent Office**

## EUROPEAN SEARCH REPORT

Application Number

EP 04 10 3567

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 255 209 A (KREBS STEFAN) 19 October 1993 (1993-10-19)<br><br>* column 1, line 50 - column 2, line 43 *<br>* column 3, line 17 - column 4, line 53 *<br>* figure 1 *<br>----- | 1-3,5, 8-11, 14-16, 18,21-24 | F02D41/24 F02D35/02 G01L27/00 G01M15/08 |
| X<br><br>A | US 2002/066445 A1 (THOMAS ERIC D) 6 June 2002 (2002-06-06)<br>* paragraphs [0005] - [0010] *<br><br>* paragraph [0040] *<br>----- | 1,14<br><br>2,6,15, 19 | |
| X<br><br>A | DE 102 33 583 A (BOSCH GMBH ROBERT) 5 February 2004 (2004-02-05)<br>* paragraphs [0003] - [0008] *<br><br>* paragraphs [0018] - [0021] *<br>* paragraphs [0037] - [0040] *<br>----- | 1,14<br><br>2,13,15, 26 | |
| A | US 4 944 271 A (OHKUBO SATORU ET AL) 31 July 1990 (1990-07-31)<br>* column 1, line 47 - column 2, line 46 *<br>* column 3, line 53 - column 4, line 15 *<br>----- | 6,7,13, 19,20,26 | TECHNICAL FIELDS SEARCHED (Int.Cl.7)<br><br>F02D G01L G01M |

The present search report has been drawn up for all claims

| Place of search | Date of completion of the search | Examiner |
|---|---|---|
| The Hague | 6 December 2004 | Parmentier, H |

EPO FORM 1503 03.82 (P04C01)

**EP 1 621 750 A1**

## ANNEX TO THE EUROPEAN SEARCH REPORT
## ON EUROPEAN PATENT APPLICATION NO.

EP 04 10 3567

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2004

| Patent document cited in search report | | Publication date | Patent family member(s) | | Publication date |
|---|---|---|---|---|---|
| US 5255209 | A | 19-10-1993 | EP | 0399069 A1 | 28-11-1990 |
| | | | DE | 58903237 D1 | 18-02-1993 |
| | | | JP | 3082918 A | 08-04-1991 |
| US 2002066445 | A1 | 06-06-2002 | AU | 3417402 A | 18-06-2002 |
| | | | CA | 2428049 A1 | 13-06-2002 |
| | | | DE | 10196969 T0 | 20-11-2003 |
| | | | GB | 2388925 A | 26-11-2003 |
| | | | JP | 2004515685 T | 27-05-2004 |
| | | | WO | 0246591 A1 | 13-06-2002 |
| DE 10233583 | A | 05-02-2004 | DE | 10233583 A1 | 05-02-2004 |
| US 4944271 | A | 31-07-1990 | JP | 1262348 A | 19-10-1989 |
| | | | DE | 3912416 A1 | 26-10-1989 |
| | | | KR | 9207896 B1 | 18-09-1992 |